# EUROPEAN PATENT APPLICATION

(11) **EP 4 289 654 A1**
(43) Date of publication of application: **13.12.2023**
(21) Application number: 23177156.9
(22) Date of filing: 05.06.2023
(51) Int. Cl.: B60L 15/20

(54) **MOTION CONTROL DEVICE FOR LEFT AND RIGHT INDEPENDENT DRIVE VEHICLE**

(30) Priority: 08.06.2022 JP 2022092976
(71) Applicant: Hitachi, Ltd., Tokyo 100-8280 (JP)
(72) Inventor: YAMASAKI, Masaru, Tokyo, 100-8280 (JP)
(74) Representative: Strehl Schübel-Hopf & Partner

(57) **Abstract**

A motion control device independently drives left and right wheels by calculating a wheel torque value from a difference between a reference vehicle state quantity calculated from driver operation information or an operation instruction of a higher driving device and an actual vehicle state quantity calculated from information regarding a motion and a posture of the vehicle, and controlling a plurality of motors based on the wheel torque value. Furthermore, the motion control device calculates a momentum error from a difference between a reference momentum calculated based on a wheel rotation speed and a tire steering angle and an actual momentum calculated based on the information regarding the motion and the posture of the vehicle, extracts a momentum error caused by a torque difference of the motor from the calculated momentum error, calculates a wheel torque correction amount based on the extracted momentum error caused by the torque difference of the motor, adds the wheel torque correction amount to the wheel torque value, and outputs a wheel torque command to the plurality of motors.

## Description

### BACKGROUND OF THE INVENTION

### 1. Field of the Invention

The present invention relates to a configuration of a control device that controls a motion of a vehicle, and more particularly to a motion control device for a vehicle in which left and right wheels are independently driven by motors.

### 2. Description of the Related Art

The electrification of automobiles is progressing toward a decarbonization and self-driving society. In a vehicle in which left and right wheels are independently driven by using motors, it is possible to enhance the motion performance and stability of the vehicle in a manner that the driving force is independently controlled to add a yaw moment, a pitch moment, and a roll moment to the vehicle or the ability of a tire is effectively used.

However, when the control accuracy of the driving forces of the left and right wheels is low, and thus it is not possible to apply the intended driving force, the mobility and stability of the vehicle are rather deteriorated. Thus, an object is to enhance the control accuracy of the driving force of the left and right wheels.

In order to achieve the above object, for example, a technique disclosed in JP 2013-158123 A has been proposed. In JP 2013-158123 A, an electric vehicle includes two traveling motors that independently drive left and right driving wheels, and the two traveling motors are driven based on command values from a torque command unit. In the traveling motor, there may be a difference in torque output characteristics due to a motor manufacturing system, assembly accuracy, a level of alignment adjustment with an inverter, aging, and the like. In order to solve this problem, in JP 2013-158123 A, a torque difference generation determination unit and a driving force difference reduction unit are provided. The torque difference generation determination unit determines a state in which a difference is generated between the actual driving forces TL and TR of the left and right driving wheels although the torque command unit provides the same torque command values TL* and TR* to the two traveling motors from information of the steering torque. When the torque difference generation determination unit determines that the driving force difference that is equal to or larger than the setting value is generated between the left and right driving wheels, the driving force difference reduction unit controls the traveling vehicle to reduce the driving force difference.

### SUMMARY OF THE INVENTION

However, in the technique disclosed in JP 2013-158123 A, when the state where the difference is generated between the actual driving forces of the left and right driving wheels although the same torque command values are given from steering torque information acting on a steering device is determined, it is not possible to distinguish whether the cause of a change in the steering torque information is the driving force difference between motors of the left and right wheels or an external cause such as a road gradient. Therefore, it may not be possible to appropriately correct the driving force difference of the motor, and to improve the control accuracy of the driving forces of the left and right wheels. For example, in a case where the vehicle is traveling on an upward slope by increasing the driving force of any one of the left and right motors, when the upward slope ends, the driving force on the side of increasing the driving force of the motor becomes excessive, and the vehicle may become unstable.

An object of the present invention is to provide a motion control device for a left and right independent drive vehicle, which is capable of correcting a torque difference of a motor in consideration of an external influence such as a road gradient and enhancing control accuracy of driving forces of left and right wheels.

In order to achieve the above object, according to the present invention, a motion control device for a left and right independent drive vehicle independently drives left and right wheels by calculating a wheel torque value from a difference between a reference vehicle state quantity calculated from driver operation information or an operation instruction of a higher driving device and an actual vehicle state quantity calculated from information regarding a motion and a posture of the vehicle, and controlling a plurality of motors based on the wheel torque value. The motion control device calculates a momentum error from a difference between a reference momentum calculated based on a wheel rotation speed and a tire steering angle and an actual momentum calculated based on the information regarding the motion and the posture of the vehicle, extracts a momentum error caused by a torque difference of the motor from the calculated momentum error, calculates a wheel torque correction amount based on the extracted momentum error caused by the torque difference of the motor, adds the wheel torque correction amount to the wheel torque value, and outputs a wheel torque command to the plurality of motors.

According to the present invention, it is possible to provide a motion control device for a left and right independent drive vehicle, which is capable of correcting a torque difference of a motor in consideration of an external influence such as a road gradient and enhancing control accuracy of driving forces of left and right wheels.

### BRIEF DESCRIPTION OF THE DRAWINGS

Fig. 1 is a plan view illustrating a schematic configuration of a vehicle 1 equipped with a motion control device 2 for a vehicle according to a first embodiment of the present invention;
Fig. 2 is a diagram illustrating a connection relationship between components of the vehicle and the motion control device for the vehicle according to the first embodiment of the present invention;
Fig. 3 is a diagram illustrating a control block in the motion control device 2 for the vehicle according to the first embodiment of the present invention;
Fig. 4 is a diagram illustrating characteristics when there is a torque difference between left and right motors;
Fig. 5 is a diagram illustrating a motion example of the vehicle when there is the torque difference between the left and right motors;
Fig. 6 is a diagram illustrating a lateral acceleration when there are a longitudinal acceleration command to the vehicle and a torque difference of the motor, and when there is no torque difference between the motors;
Fig. 7 is a diagram illustrating a relationship between a frequency and lateral acceleration intensity;
Fig. 8 is a diagram illustrating a relationship between the frequency and the lateral acceleration intensity in each general behavior;
Fig. 9 is a diagram illustrating characteristics due to a motor torque difference of a lateral acceleration generated in the vehicle on a frequency axis;
Fig. 10 is a diagram illustrating a configuration of the motion control device 2 for a vehicle equipped with a plurality of bandpass filters; and
Fig. 11 is a diagram illustrating a torque magnitude and a posture change state in a case of four-wheel independent drive.

### DESCRIPTION OF THE PREFERRED EMBODIMENTS

Hereinafter, embodiments of the present invention will be described with reference to the accompanying drawings. The same components are denoted by the same reference signs, and the same description will not be repeated.

The various components of the present invention do not necessarily need to be independent, and allow one component to be configured by a plurality of members, a plurality of components to be configured by one member, a certain component to be a portion of another component, a portion of one component and a portion of another component to overlap with each other, and the like.

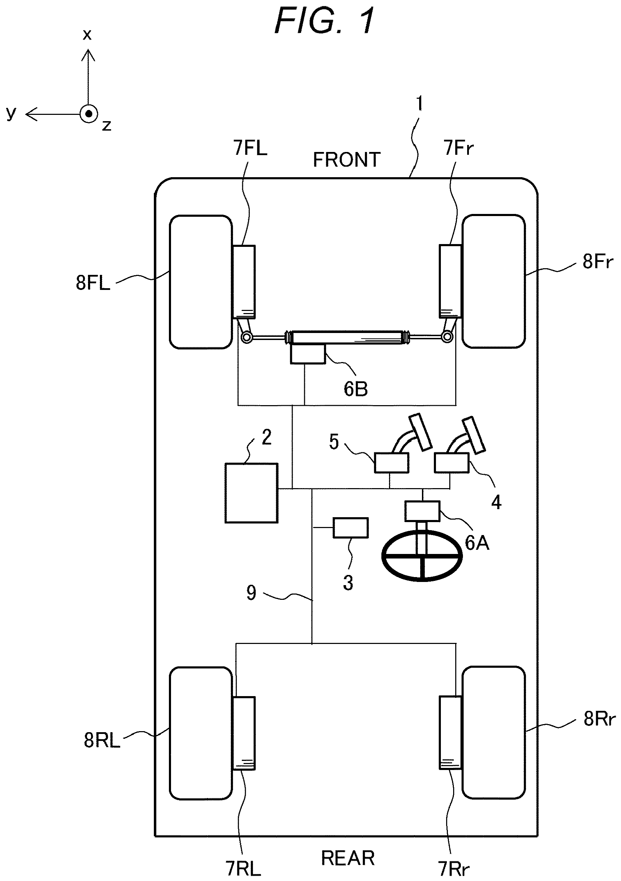

A motion control device for a left and right independent drive vehicle will be described with reference to Figs. 1 to 11. In the present embodiment, as described below, a plurality of independent motors are provided on the left and right of a vehicle, and the left and right wheels are independently driven by controlling the plurality of motors based on a wheel torque value.

Fig. 1 is a plan view illustrating a schematic configuration of a vehicle 1 equipped with a motion control device 2 for a vehicle according to a first embodiment of the present invention.

In Fig. 1, the vehicle 1 in the present embodiment includes a vehicle momentum sensor 3, an accelerator pedal 4, a brake pedal 5, a steering wheel 6A, a steering mechanism 6B, in-wheel motors (left front motor 7FL, right front motor 7Fr, left rear motor 7RL, and right rear motor 7Rr), tires (left front tire 8FL, right front tire 8Fr, left rear tire 8RL, and right rear tire 8Rr), and a controller area network 9 that connects the respective devices.

Other components and power supply wirings to the respective devices are similar to those of a normal vehicle, but are not necessary in the description of the present embodiment. Thus, illustration and description thereof will be omitted. In the coordinate system used for the description, the front-rear direction of the vehicle 1 is set as an x-axis (the forward direction is positive), the left-right direction is set as a y-axis (the leftward direction is positive), and the up-down direction is set as a z-axis (the upward direction is positive).

The vehicle 1 is driven by generating a driving force for the in-wheel motor of each wheel with reference to an input of the accelerator pedal. In the present embodiment, each tire can independently generate driving torque and braking torque, and can adjust the driving torque and the braking torque in accordance with a traveling situation or the like.

The traveling direction of the vehicle is changed in a manner that the steering mechanism 6B steers the front wheel with reference to an input of the steering wheel 6A. In the present embodiment, a bi-wire system in which the steering wheel and the steering mechanism are connected by an electric wire is provided.

Braking of the vehicle is performed by generating a braking force for the in-wheel motor of each wheel with reference to an input of the brake pedal 5. In order to cope with a region in which control by each in-wheel motor is not possible, a friction brake is used or used in combination, but since the friction brake is a component unnecessary for the description of the present embodiment as described above, the description of the friction brake will be omitted.

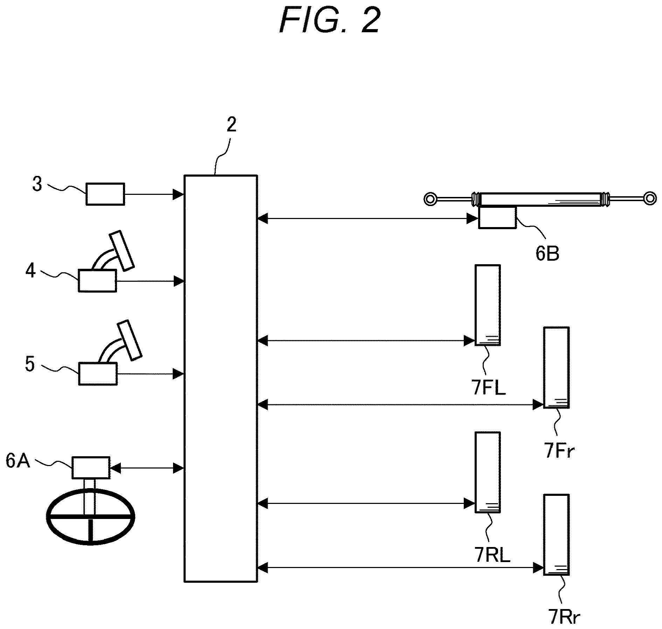

Fig. 2 is a diagram illustrating a connection relationship between components of the vehicle and the motion control device 2 for the vehicle according to the first embodiment of the present invention. The motion control device 2 for the vehicle receives information regarding the motion and the posture of the vehicle from the vehicle momentum sensor 3, and receives driver operation information from the accelerator pedal 4, the brake pedal 5, and the steering wheel 6A. The motion control device 2 for the vehicle calculates a steering angle of the front wheel and braking/driving torque of each wheel in order to realize a desired vehicle motion, and outputs a torque command to the steering mechanism 6B and each in-wheel motor (left front motor 7FL, right front motor 7Fr, left rear motor 7RL, and right rear motor 7Rr). In addition, the motion control device 2 for the vehicle has a configuration of receiving device information such as a steering angle, a steering force, and a wheel rotational speed from the steering mechanism 6B and each in-wheel motor. The information regarding the motion and the posture of the vehicle includes a longitudinal acceleration, a lateral acceleration, a roll rate, a pitch rate, a yaw rate, and the like. The information regarding the motion and the posture of the vehicle may be a rotational speed difference and a rotational angle difference between the motors.

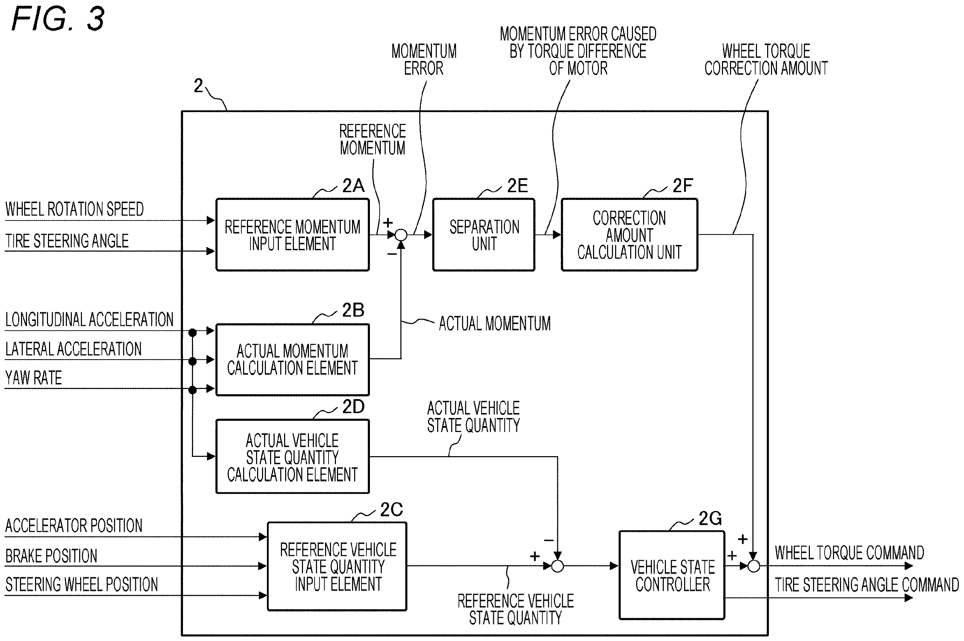

Fig. 3 is a diagram illustrating a control block in the motion control device 2 for the vehicle according to the first embodiment of the present invention. Inputs of the motion control device 2 for the vehicle are a wheel rotation speed and a tire steering angle from the steering mechanism and each in-wheel motor as equipment information, a longitudinal acceleration, a lateral acceleration, and a yaw rate from the vehicle momentum sensor as the information regarding the motion and the posture of the vehicle, and an accelerator position, a brake position, and a steering wheel position from the accelerator pedal, the brake pedal, and the steering wheel as the driver operation information. The outputs of the motion control device 2 for the vehicle are wheel torque commands and tire steering angle commands.

The present invention is similarly applicable to both a manually driven vehicle and a vehicle driven by an automatic driving device, and an operation instruction of a higher driving device such as the automatic driving device can be used as an input of the motion control device 2 for the vehicle instead of the driver operation information.

The processing in the motion control device 2 for the vehicle is roughly divided into two parts. The first is a part for controlling the vehicle state, and the second is a part for calculating the correction amount of the wheel torque value.

In the first part for controlling the vehicle state, a reference vehicle state quantity input element 2C calculates a reference vehicle state quantity from the above-described driver operation information. An actual vehicle state quantity calculation element 2D calculates an actual vehicle state quantity from the information regarding the motion and the posture of the vehicle. Then, a vehicle state quantity error is calculated from a difference between the reference vehicle state quantity and the actual vehicle state quantity, and a vehicle state controller 2G calculates a wheel torque value and a tire steering angle which are operation quantities, based on the calculated vehicle state quantity error.

In the part for calculating the correction amount of the wheel torque value, a reference momentum input element 2A calculates a reference momentum from the above-described device information. An actual momentum calculation element 2B calculates an actual momentum from the information regarding the motion and the posture of the vehicle. Then, a momentum error is calculated from a difference between the reference momentum reference and the actual momentum. A separation unit 2E extracts a momentum error caused by a torque difference of the motor from the calculated momentum error, and a correction amount calculation unit 2F calculates a wheel torque correction amount from the extracted momentum error. Finally, the wheel torque value calculated in the first part for controlling the vehicle state is corrected by adding the wheel torque correction amount calculated in the second part for calculating the correction amount of the wheel torque value, and the corrected wheel torque value is output from the motion control device 2 as the wheel torque command. Regarding the tire steering angle command, the value calculated in the first part for controlling the vehicle state itself is output from the motion control device 2 as the tire steering angle command.

In the present embodiment, a vehicle in which the driver gets in the vehicle and performs a driving operation is used. The present invention is not limited thereto. For example, a configuration in which the input to the motion control device 2 for the vehicle is given from a higher automatic driving control device may be made. Further, in the present embodiment, the vehicle of a four-wheel in-wheel motor is used. The present invention is not limited thereto. For example, a vehicle that drives only two front wheels or only two rear wheels may be used, or a configuration in which the left and right wheels are driven by two motors mounted on the vehicle body of a vehicle instead of the in-wheel motor may be made.

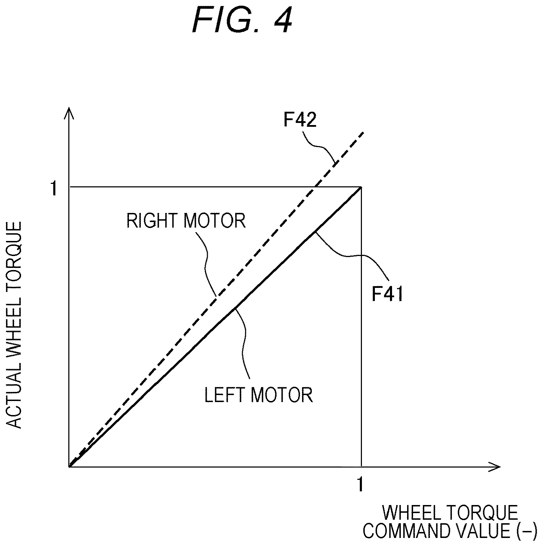

A specific operation according to the present embodiment will be described below by taking, as an example, traveling in which a driving force is applied only to the rear wheels and linear acceleration is performed. Fig. 4 is a diagram illustrating characteristics when there is a torque difference between left and right motors. As illustrated in Fig. 4, there is an individual difference between the left and right motors arranged on the rear wheels, and the torque F42 of the right motor is larger than the torque F41 of the left motor in response to the same wheel torque command.

When the vehicle performs linear acceleration, the driver operates the accelerator. In the motion control device 2 for the vehicle, the reference vehicle state quantity input element 2C receives the input, calculates the reference longitudinal acceleration, sets the calculated reference longitudinal acceleration as the reference vehicle state quantity. Here, the vehicle state controller 2G calculates and outputs the wheel torque command so that the current longitudinal acceleration becomes equal to the reference longitudinal acceleration. Since the vehicle travels straight in this state, the left and right wheel torques are commanded to have the same value.

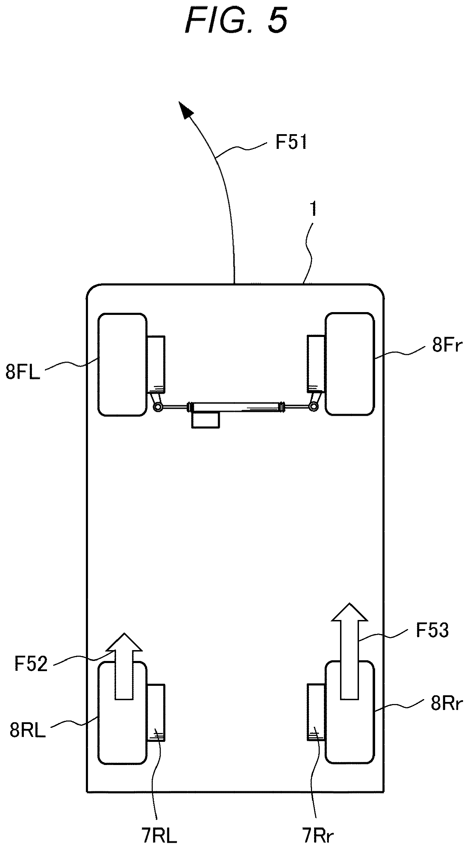

Fig. 5 is a diagram illustrating a motion example of the vehicle when there is the torque difference between the left and right motors. Based on the wheel torque command output from the vehicle state controller 2G, the in-wheel motor generates torque and generates a traction force for advancing the vehicle forward. Here, since there is an individual difference between the left and right in-wheel motors (left rear motor 7RL and right rear motor 7Rr), the right traction force F53 is larger than the left traction force F52 (F53 > F52), and the vehicle motion turns left as in a course F51. The left turn causes a positive yaw rate and a positive lateral acceleration in the vehicle. As described above, as the command from the motion control device 2 for the vehicle, a result that, although the left and right wheel torques are equal and linear acceleration is performed, the vehicle turns left due to a difference in actual torque of the motor is obtained.

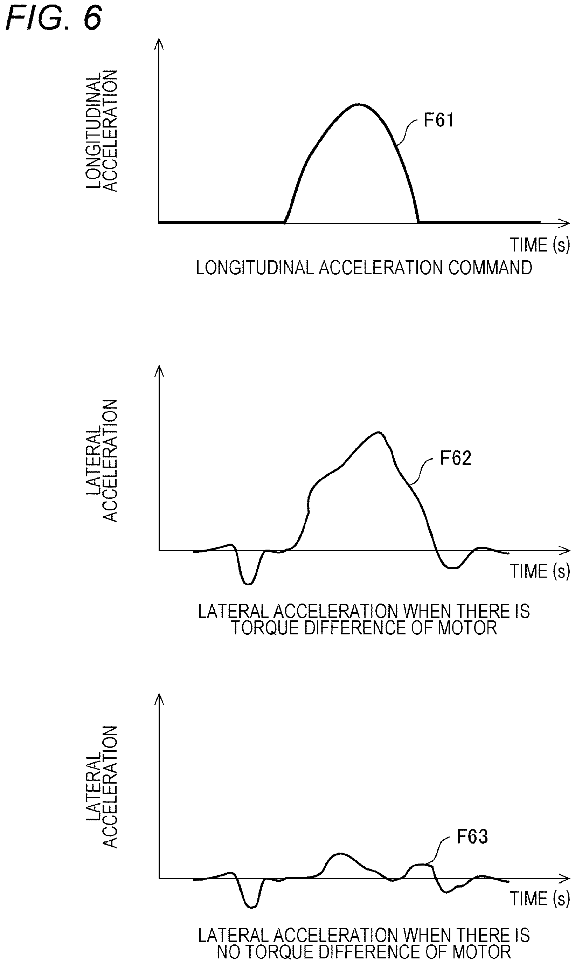

Fig. 6 is a diagram illustrating the lateral acceleration when there are the longitudinal acceleration command to the vehicle and the torque difference of the motor, and when there is no torque difference of the motor.

In a case where the wheel torque value is generated by a longitudinal acceleration command F61 to the vehicle, when there is a torque difference between the left and right motors, a lateral acceleration F62 in the positive direction is generated as in the above-described operation. At this time, the lateral acceleration is affected by a vehicle motion due to road noise, which is unevenness of the road surface, a suspension operation and deflection of each part in addition to the torque difference of the motor, and thus has a distorted shape as illustrated in Fig. 6. On the other hand, when there is no torque difference between the left and right motors, the influence of the vehicle motion due to the road noise that is unevenness of the road surface, the suspension operation, and the deflection of each part are observed as in a normal lateral acceleration F63.

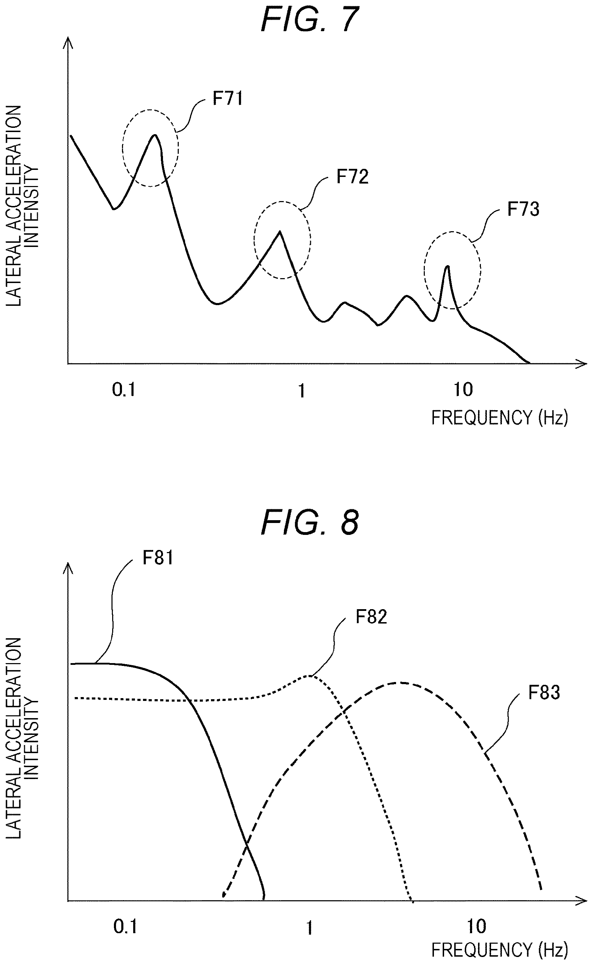

Fig. 7 is a diagram illustrating a relationship between a frequency and lateral acceleration intensity. Fig. 7 illustrates a result obtained by frequency-analyzing the lateral acceleration F62 (Fig. 6) when there is the torque difference of the motor. Three peaks are observed from the lower frequency. Respective peaks mean a behavior F71, a vehicle motion F72, and road noise F73 caused by the torque difference of the motor.

Here, frequency characteristics of each general behavior will be described. Fig. 8 is a diagram illustrating a relationship between the frequency and the lateral acceleration intensity in each general behavior. Fig. 8 illustrates the frequency characteristics of a behavior F81, a vehicle motion F82, and road noise F83 caused by the torque difference of the motor from the lower frequency. As illustrated in Fig. 8, it is possible to identify the behavior F81, the vehicle motion F82, and the road noise F83 caused by the torque difference of the motor from the difference in frequency with respect to the lateral acceleration intensity.

From the above description, by filtering the lateral acceleration in the frequency domain, it is possible to extract only the component caused by the torque difference of the motor among the lateral accelerations generated in the vehicle. Specifically, a lowpass filter is applied to extract only the component caused by the torque difference of the motor.

In the motion control device 2 for the vehicle in the present embodiment, the wheel torque correction amount is calculated by using this principle. That is, the reference momentum input element 2A calculates the estimated lateral acceleration based on the wheel rotation speed and the tire steering angle and sets the calculated lateral acceleration as the momentum reference, and the actual momentum calculation element 2B calculates the actual lateral acceleration based on the longitudinal acceleration, the lateral acceleration, and the yaw rate and sets the calculated actual lateral acceleration as the actual momentum. The difference (momentum error) from the reference momentum is calculated.

The separation unit 2E applies a lowpass filter to the difference (momentum error) to extract a momentum error caused by the torque difference of the motor. Since the momentum error as the difference is the lateral acceleration component, it is possible to separate the disturbance component for the vehicle from the difference in frequency characteristics through the lowpass filter and extract only the momentum error caused by the torque difference of the motor. Furthermore, the correction amount calculation unit 2F calculates the wheel torque correction amount from the relational expression between the lateral acceleration and the wheel torque difference used in the present embodiment. The wheel torque correction amount is added to the wheel torque value calculated by the vehicle state controller 2G and used as the output of the motion control device 2 for the vehicle as the wheel torque command. The wheel torque command is output to each of the left and right motors.

With the above operation, the wheel torque command is in a state in which the command value is corrected by the torque difference of the motor, and finally, the traction force generated in the vehicle is equal between the left and right motors. Thus, the vehicle can correctly perform the linear acceleration in response to the command of linear acceleration, without performing the turning motion. In the case of Fig. 5, the right traction force F53 is larger than the left traction force F52. Thus, for example, the left wheel torque command is increased by 5% with respect to the right wheel torque command so that the right traction force F53 is equal to the left traction force F52. Alternatively, the right wheel torque command is lowered by 5% with respect to the left wheel torque command.

In addition, in the calculation of the wheel torque correction amount, the influence of the vehicle motion due to the road noise which is the unevenness of the road surface, the suspension operation, and the deflection of each part is removed in addition to the torque difference of the motor, and only the torque difference between the left and right motors is correctly corrected. Therefore, it is possible to provide the motion control device for the vehicle, which is capable of suppressing application of erroneous correction and enhancing the control accuracy of the driving forces of the left and right wheels.

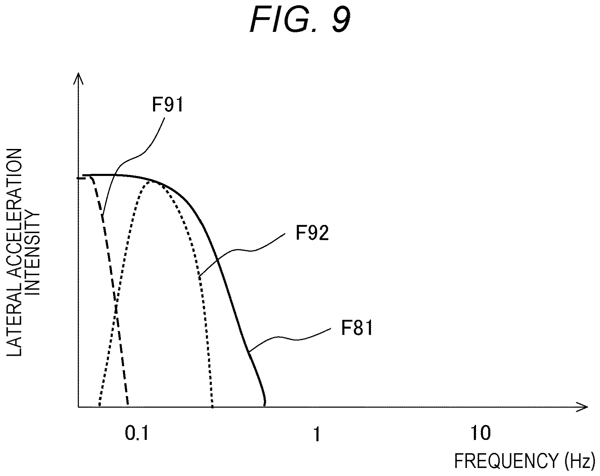

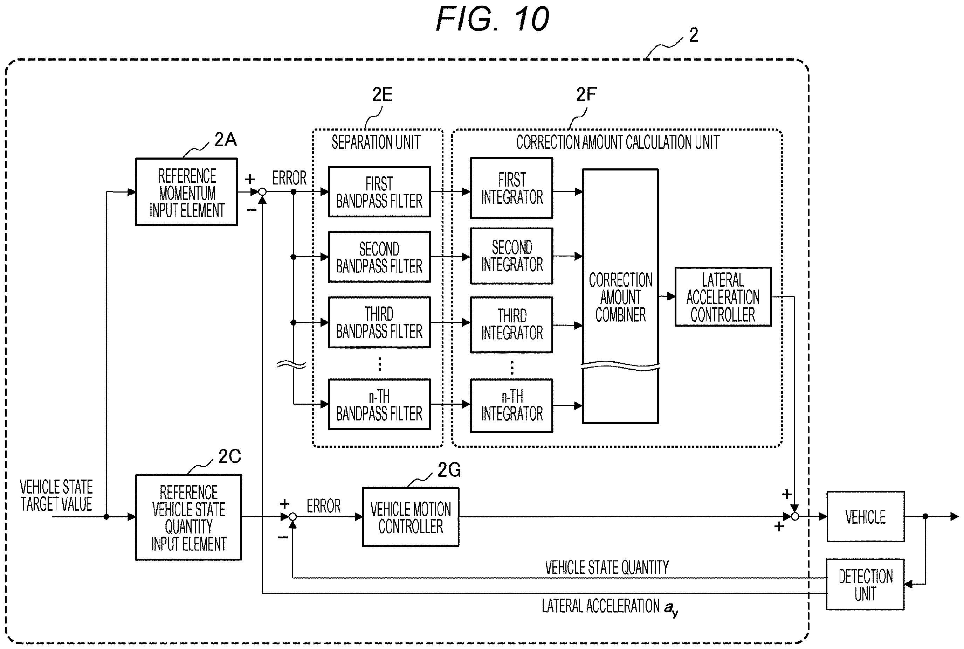

When the frequency domain is more finely separated in the separation unit 2E as illustrated in Fig. 9, it is possible to separate the component caused by the torque difference of the motor into a behavior F91 caused by a constant difference such as an individual difference of the motor and a behavior F92 caused by a temporary difference due to the temperature or the like. With such a configuration, it is possible to provide the motion control device for the vehicle, which is capable of enhancing the control accuracy of the driving forces of the left and right wheels by performing more accurate correction. Fig. 10 illustrates a configuration for realizing this.

Fig. 10 is a diagram illustrating a configuration of the motion control device 2 for a vehicle equipped with a plurality of bandpass filters.

The separation unit 2E includes n bandpass filters. The bandpass filters (first to n-th bandpass filters) are installed with different passing frequency bands, and an influence of a target cause is extracted from a signal input to the separation unit 2E.

In addition, the correction amount calculation unit 2F has a configuration in which a plurality of integrators (first to n-th integrators) corresponding to the respective bandpass filters are mounted, and the correction amounts are calculated and combined to calculate the wheel torque correction amount. The calculated wheel torque correction amount is output from a lateral acceleration controller of the correction amount calculation unit 2F.

As described above, according to the motion control device 2 for the vehicle in the present embodiment, by separating the difference between the estimated value and the actual value of the vehicle momentum by the frequency, dividing the difference into the component due to a drive torque difference between the motors and the component due to the vehicle disturbance, and accurately correcting the drive torque difference between the motors, it is possible to provide the motion control device 2 for the vehicle, which is capable of accurately correcting the drive torque difference.

Simple straight acceleration has been described in the present embodiment, but the present invention is not limited thereto. For example, correction may be applied during traveling such as acceleration on an acceleration lane of an expressway, merging and accelerating to a highway, stopping of a signal on a general road (a correction amount is calculated by a behavior with braking torque), and a behavior on a climbing road. The correction amount may be calculated at all times.

### [Modification Examples]

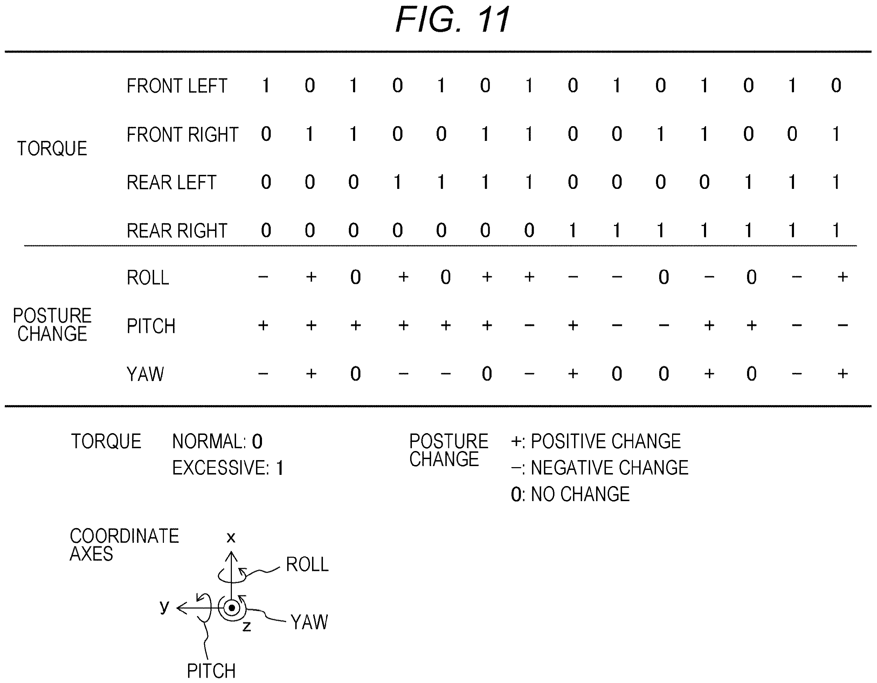

A case of four-wheel independent drive in which four wheels are driven by controlling four motors will be described with reference to Fig. 11. Fig. 11 is a diagram illustrating a torque magnitude and a posture change state in the case of the four-wheel independent drive. As illustrated in Fig. 11, there is a correlation between the magnitude of the torque and how the torque appears in the posture change.

For example, even when the motor torque on the left side is excessive compared to the motor torque on the right side, a difference occurs in the posture change of the vehicle depending on the front and rear positions of the motor in which the motor torque is excessive. In Fig. 11, when the motor torque on the front left side is excessive compared to the motor torque on the front right side, the motor torque on the rear right side, and the motor torque on the rear left side, the roll rate and the yaw rate of the vehicle show negative changes, and the pitch rate of the vehicle shows positive change. When the motor torque on the left rear side is excessive compared to the motor torque on the right front side, the motor torque on the right rear side, and the motor torque on the left front side even on the same left side, the roll rate and the pitch rate of the vehicle show positive changes, and the yaw rate shows negative change.

In the present embodiment, by calculating the momentum error regarding the four motors based on the posture change (information regarding the motion and the posture of the vehicle) and calculating the correction amount of the wheel torque value by using the above relationship, it is possible to more accurately calculate the wheel torque correction amount. Thus, by forming the motion control device 2 using this mechanism, it is possible to provide the motion control device for the vehicle, which is capable of further enhancing the control accuracy of the driving force.

In the present embodiment, it is assumed that the reference vehicle state quantity is calculated from the driver operation information. For example, the reference vehicle state quantity may be calculated from an operation instruction of a higher driving device, a so-called automatic driving device, or the like.

## Claims

1. A motion control device for a left and right independent drive vehicle, that independently drives left and right wheels by calculating a wheel torque value from a difference between a reference vehicle state quantity calculated from driver operation information or an operation instruction of a higher driving device and an actual vehicle state quantity calculated from information regarding a motion and a posture of the vehicle, and controlling a plurality of motors based on the wheel torque value, wherein
the motion control device
calculates a momentum error from a difference between a reference momentum calculated based on a wheel rotation speed and a tire steering angle and an actual momentum calculated based on the information regarding the motion and the posture of the vehicle,
extracts a momentum error caused by a torque difference of the motor from the calculated momentum error,
calculates a wheel torque correction amount based on the extracted momentum error caused by the torque difference of the motor,
adds the wheel torque correction amount to the wheel torque value, and
outputs a wheel torque command to the plurality of motors.

2. The motion control device for a left and right independent drive vehicle according to claim 1, wherein
the actual momentum is calculated based on a longitudinal acceleration, a lateral acceleration, and a yaw rate of the vehicle.

3. The motion control device for a left and right independent drive vehicle according to claim 2, wherein
the reference momentum is an estimated lateral acceleration, and
the actual momentum is an actual lateral acceleration.

4. The motion control device for a left and right independent drive vehicle according to claim 3, wherein
the motion control device comprises a separation unit, and
the separation unit separates a disturbance component for the vehicle from a frequency characteristic related to the momentum error and extracts the momentum error caused by the torque difference of the motor.

5. The motion control device for a left and right independent drive vehicle according to claim 4, wherein
the separation unit separates, from the momentum error caused by the torque difference of the motor, a behavior caused by a constant difference due to an individual difference of the motor and a behavior caused by a temporary difference due to a temperature, in accordance with the frequency characteristic.

6. The motion control device for a left and right independent drive vehicle according to any of claims 1 to 5, wherein
the information regarding the motion and the posture of the vehicle is set to a rotational speed difference and a rotational angle difference between the motors.

7. The motion control device for a left and right independent drive vehicle according to any of claims 1 to 6, wherein
the motion control device controls four motors to independently drive four wheels,
the information regarding the motion and the posture of the vehicle is a yaw rate, a pitch rate, and a roll rate of the vehicle, and
a momentum error between the four motors is calculated based on the yaw rate, the pitch rate, and the roll rate.
